# EUROPÄISCHE PATENTSCHRIFT

(11) **EP 3 782 275 B1**
(45) Veröffentlichungstag und Bekanntmachung des Hinweises auf die Patenterteilung: **25.09.2024**
(21) Anmeldenummer: 19746020.7
(22) Anmeldetag: 15.07.2019
(51) Int. Cl.: H02M 3/335, H02M 3/337, H02M 1/00

(54) **GLEICHSPANNUNGSWANDLER UND DESSEN BETREIBEN**
DC-DC CONVERTER AND USE OF SAME
CONVERTISSEUR DE TENSION CONTINUE ET SON FONCTIONNEMENT

(30) Priorität: 23.07.2018 EP 18184944
(43) Veröffentlichungstag der Anmeldung: 24.02.2021
(73) Patentinhaber: Siemens Aktiengesellschaft, 80333 München (DE)
(72) Erfinder: ZOCHER, Markus, 91639 Wolframs-Eschenbach (DE); HERGT, Martin, 90411 Nürnberg (DE)
(74) Vertreter: Siemens Patent Attorneys
(86) Internationale Anmeldenummer: PCT/EP2019/068997
(87) Internationale Veröffentlichungsnummer: WO 2020/020685

(56) Entgegenhaltungen:
- FR-A1- 3 050 593
- JP-A- 2013 027 201
- XIAODONG LI ET AL: "Analysis and Design of High-Frequency Isolated Dual-Bridge Series Resonant DC/DC Converter", IEEE TRANSACTIONS ON POWER ELECTRONICS, vol. 25, no. 4, 1 April 2010 (2010-04-01), USA, pages 850 - 862, XP055455666, ISSN: 0885-8993, DOI: 10.1109/TPEL.2009.2034662
- HUANG QICHENG ET AL: "A bi-directional resonant DC/DC converter with frequency tracking control", 2014 IEEE ENERGY CONVERSION CONGRESS AND EXPOSITION (ECCE), IEEE, 14 September 2014 (2014-09-14), pages 4748 - 4754, XP032681139, DOI: 10.1109/ECCE.2014.6954051
- SEGARAN D ET AL: "Comparative analysis of single and three-phase dual active bridge bidirectional DC-DC converters", UNIVERSITIES POWER ENGINEERING CONFERENCE, 2008. AUPEC '08. AUSTRALASIAN, IEEE, PISCATAWAY, NJ, USA, 14 December 2008 (2008-12-14), pages 1 - 6, XP031448299, ISBN: 978-0-7334-2715-2

## Beschreibung

Die Erfindung betrifft einen Gleichspannungswandler mit einer Dual Active Bridge-Topologie und einem Serienresonanzkreis für jede Wechselspannungsphase und ein Verfahren zum Betreiben eines derartigen Gleichspannungswandlers.

Ein Gleichspannungswandler mit einer Dual Active Bridge-Topologie weist zwei Wandlereinheiten mit jeweils mehreren Halbleiterschaltern und eine zwischen die beiden Wandlereinheiten geschaltete Transformatoreinheit auf. Mit einer Wandlereinheit wird aus einer Eingangsgleichspannung eine primäre Wechselspannung erzeugt, die von der Transformatoreinheit in eine sekundäre Wechselspannung transformiert wird. Mit der anderen Wandlereinheit wird aus der sekundären Wechselspannung eine Ausgangsgleichspannung erzeugt. Die Wechselspannungen können ein- oder mehrphasig sein und werden mit einer Taktfrequenz getaktet, mit der die Halbleiterschalter angesteuert werden. Die Erfindung betrifft einen in Dual Active Bridge-Topologie ausgeführten Gleichspannungswandler, der für jede Wechselspannungsphase einen Serienresonanzkreis mit wenigstens einem Kondensator und wenigstens einer Spule aufweist. Üblicherweise wird die Leistung oder die Ausgangsgleichspannung eines derartigen Gleichspannungswandlers durch die Änderung einer Phasenverschiebung zwischen der primären und der sekundären Wechselspannung geregelt. Dabei hängt der Wirkungsgrad des Gleichspannungswandlers von dem Verhältnis der Ausgangsgleichspannung zu der Eingangsgleichspannung ab. Der Wirkungsgrad ist am besten, wenn dieses Verhältnis mit dem Übersetzungsverhältnis der Transformatoreinheit übereinstimmt oder nur wenig von dem Übersetzungsverhältnis der Transformatoreinheit abweicht. Bei größeren Abweichungen dieses Verhältnisses von dem Übersetzungsverhältnis der Transformatoreinheit nimmt der Wirkungsgrad ab.

FR 3 050 593 A1 offenbart ein Verfahren und ein System zum Steuern eines Gleichspannungswandlers mit einer Doppelbrückentopologie mit zwei Stromrichtern zum Umwandeln einer ersten Gleichspannung in eine zweite Gleichspannung. Dabei wird ein optimaler Phasenverschiebungswinkel zwischen zwei Wechselspannungen bestimmt, die zum Umwandeln der ersten Gleichspannung in die zweite Gleichspannung erzeugt werden.

Der Erfindung liegt die Aufgabe zugrunde, den Wirkungsgrad eines Gleichspannungswandlers mit einer Dual Active Bridge-Topologie und einem Serienresonanzkreis für jede Wechselspannungsphase zu optimieren.

Die Aufgabe wird erfindungsgemäß durch ein Verfahren mit den Merkmalen des Anspruchs 1 und einen Gleichspannungswandler mit den Merkmalen des Anspruchs 2 gelöst. Vorteilhafte Ausgestaltungen der Erfindung sind Gegenstand der Unteransprüche.

Das erfindungsgemäße Verfahren ist auf das Betreiben eines Gleichspannungswandlers zum Erzeugen einer mehrphasigen primären Wechselspannung aus einer Eingangsgleichspannung, Transformieren der primären Wechselspannung in eine sekundäre Wechselspannung mit einem Übersetzungsverhältnis und Erzeugen einer Ausgangsgleichspannung aus der sekundären Wechselspannung gerichtet, wobei der Gleichspannungswandler eine Dual Active Bridge-Topologie mit einem Serienresonanzkreis für jede Wechselspannungsphase aufweist. Erfindungsgemäß wird eine Phasenverschiebung zwischen der primären Wechselspannung und einem dazu korrespondierenden Serienresonanzkreisstrom durch eine Änderung einer die Wechselspannungen taktenden Taktfrequenz auf Null geregelt, wenn das Verhältnis der Ausgangsgleichspannung zu der Eingangsgleichspannung größer als das Übersetzungsverhältnis ist, und eine Phasenverschiebung zwischen der sekundären Wechselspannung und einem dazu korrespondierenden Serienresonanzkreisstrom durch eine Änderung der Taktfrequenz auf Null geregelt, wenn das Verhältnis der Ausgangsgleichspannung zu der Eingangsgleichspannung kleiner als das Übersetzungsverhältnis ist.

Kernidee der Erfindung ist, die Phasenverschiebung zwischen der primären oder sekundären Wechselspannung des Gleichspannungswandlers und einem dazu korrespondierenden Serienresonanzkreisstrom durch eine Änderung der Taktfrequenz der Wechselspannung zu Null zu regeln. Ob die Phasenverschiebung zwischen der primären oder sekundären Wechselspannung und dem Serienresonanzkreisstrom zu Null geregelt wird, hängt dabei davon ab, ob das Verhältnis der Ausgangsgleichspannung zu der Eingangsgleichspannung größer oder kleiner als das Übersetzungsverhältnis der Transformatoreinheit ist. Durch die Regelung werden einerseits Durchgangsverluste reduziert, da die durch eine von der Primärseite beziehungsweise von der Sekundärseite in einen Serienresonanzkreis fließende Blindleistung reduziert wird. Ferner werden Umschaltverluste beim Schalten der Spannungsbrücken deutlich reduziert, da eine primärseitige beziehungsweise sekundärseitige Spannungsbrücke gerade dann umgeschaltet wird, wenn der Strom durch den korrespondierenden Serienresonanzkreis Null oder wenigstens fast Null ist (so genanntes Zero Current Switching). Ohne eine derartige Regelung der Phasenverschiebung zwischen der primären beziehungsweise sekundären Wechselspannung und dem Serienresonanzkreisstrom würden größere Abweichungen des Verhältnisses der Ausgangsgleichspannung zu der Eingangsgleichspannung von dem Übersetzungsverhältnis der Transformatoreinheit zu Phasenverschiebungen zwischen der primären beziehungsweise sekundären Wechselspannung und dem Serienresonanzkreisstrom führen, die die Durchgangsverluste und Umschaltverluste erhöhen und den Wirkungsgrad des Gleichspannungswandlers herabsetzen.

Als Phasenverschiebung zwischen der primären oder sekundären Wechselspannung und einem dazu korrespondierenden Serienresonanzkreisstrom wird dabei jeweils der Mittelwert von Phasenverschiebungen zwischen jeweils einer Wechselspannungsphase und dem durch den Serienresonanzkreis dieser Wechselspannungsphase fließenden Strom geregelt. Es wird also ein Mittelwert von Phasenverschiebungen zwischen jeweils einer Wechselspannungsphase der primären Wechselspannung und dem durch den Serienresonanzkreis dieser Wechselspannungsphase fließenden Strom auf Null geregelt, wenn das Verhältnis der Ausgangsgleichspannung zu der Eingangsgleichspannung größer als das Übersetzungsverhältnis ist, und ein Mittelwert von Phasenverschiebungen zwischen jeweils einer Wechselspannungsphase der sekundären Wechselspannung und dem durch den Serienresonanzkreis dieser Wechselspannungsphase fließenden Strom auf Null geregelt, wenn das Verhältnis der Ausgangsgleichspannung zu der Eingangsgleichspannung kleiner als das Übersetzungsverhältnis ist. Es werden also Mittelwerte von Phasenverschiebungen zwischen jeweils einer Wechselspannungsphase der primären beziehungsweise sekundären Wechselspannung und dem dazu korrespondierenden Serienresonanzkreisstrom ermittelt und zu Null geregelt. Dadurch können vorteilhaft Messungenauigkeiten bei der Ermittlung der einzelnen Phasenverschiebungen und kleine Schwankungen der Phasenbeziehungen zwischen den verschiedenen Wechselstromphasen ausgeglichen werden.

Die Erfindung sieht vor, dass durch eine Änderung einer Phasenverschiebung zwischen der primären Wechselspannung und der sekundären Wechselspannung eine von dem Gleichspannungswandler übertragene Leistung auf einen Leistungssollwert oder die Ausgangsgleichspannung auf einen Spannungssollwert geregelt wird. Diese Ausgestaltung der Erfindung sieht eine Zwei-Größen-Regelung des Gleichspannungswandlers vor, bei der neben der Taktfrequenz auch die Phasenverschiebung zwischen der primären Wechselspannung und der sekundären Wechselspannung geändert wird. Dadurch kann die Leistung oder die Ausgangsgleichspannung des Gleichspannungswandlers mit einem optimierten Wirkungsgrad geregelt werden. Unter einer Phasenverschiebung zwischen der primären Wechselspannung und der sekundären Wechselspannung wird dabei ein Mittelwert von Phasenverschiebungen zwischen jeweils einer Wechselspannungsphase der primären Wechselspannung und einer dazu korrespondierenden Wechselspannungsphase der sekundären Wechselspannung verstanden.

Ein erfindungsgemäßer Gleichspannungswandler zum Erzeugen einer mehrphasigen primären Wechselspannung aus einer Eingangsgleichspannung, Transformieren der primären Wechselspannung in eine sekundäre Wechselspannung mit einem Übersetzungsverhältnis und Erzeugen einer Ausgangsgleichspannung aus der sekundären Wechselspannung umfasst für jede Wechselspannungsphase eine primärseitige Spannungsbrücke mit mehreren Halbleiterschaltern zum Erzeugen der primären Wechselspannung aus der Eingangsgleichspannung, eine Transformatoreinheit zum Transformieren der primären Wechselspannung in die sekundäre Wechselspannung, für jede Wechselspannungsphase eine sekundärseitige Spannungsbrücke mit mehreren Halbleiterschaltern zum Erzeugen der Ausgangsgleichspannung aus der sekundären Wechselspannung, für jede Wechselspannungsphase einen Serienresonanzkreis und eine Messvorrichtungsanordnung. Die Messvorrichtungsanordnung ist zum Erfassen der Eingangsgleichspannung, der Ausgangsgleichspannung und zeitlicher Verläufe mehrerer Wechselspannungsphasen der primären Wechselspannung, der dazu korrespondierenden Wechselspannungsphasen der sekundären Wechselspannung und der durch die Serienresonanzkreise dieser Wechselspannungsphasen fließenden Ströme ausgebildet. Ferner umfasst der Gleichspannungswandler eine Regelungseinheit, die dazu ausgebildet ist, einen Mittelwert der Phasenverschiebungen zwischen jeweils einer dieser Wechselspannungsphasen der primären Wechselspannung und dem durch den Serienresonanzkreis dieser Wechselspannungsphase fließenden Strom durch eine Änderung einer die Wechselspannungen taktenden Taktfrequenz auf Null zu regeln, wenn das Verhältnis der Ausgangsgleichspannung zu der Eingangsgleichspannung größer als das Übersetzungsverhältnis ist, und einen Mittelwert der Phasenverschiebungen zwischen jeweils einer dieser Wechselspannungsphasen der sekundären Wechselspannung und dem durch den Serienresonanzkreis dieser Wechselspannungsphase fließenden Strom durch eine Änderung der Taktfrequenz auf Null zu regeln, wenn das Verhältnis der Ausgangsgleichspannung zu der Eingangsgleichspannung kleiner als das Übersetzungsverhältnis ist.

Ein erfindungsgemäßer Gleichspannungswandler ermöglicht die Durchführung des erfindungsgemäßen Verfahrens. Die Vorteile eines erfindungsgemäßen Gleichspannungswandlers entsprechen den oben bereits genannten Vorteilen des erfindungsgemäßen Verfahrens und werden hier nicht noch einmal wiederholt. Bei einer Ausgestaltung eines erfindungsgemäßen Gleichspannungswandlers ist jede primärseitige Spannungsbrücke eine Halbbrücke, in deren Brückenarmen jeweils ein Halbleiterschalter angeordnet ist und deren Brückenzweig mit einer Primärwicklung der Transformatoreinheit verbunden ist, und jede sekundärseitige Spannungsbrücke ist eine Halbbrücke, in deren Brückenarmen jeweils ein Halbleiterschalter angeordnet ist und deren Brückenzweig mit einer Sekundärwicklung der Transformatoreinheit verbunden ist. Als Halbbrücken ausgebildete Spannungsbrücken reduzieren gegenüber als Vollbrücken ausgebildeten Spannungsbrücken vorteilhaft die Anzahl der Halbleiterschalter und damit den Platzbedarf und die Materialkosten für die Spannungsbrücken.

Bei einer weiteren Ausgestaltung eines erfindungsgemäßen Gleichspannungswandlers ist die Transformatoreinheit als ein mehrphasiger Transformator ausgebildet oder weist für jede Wechselspannungsphase einen Transformator auf. Die Ausführung der Transformatoreinheit als ein mehrphasiger Transformator vereinfacht die Ausbildung des Gleichspannungswandlers gegenüber der Ausführung mit einzelnen Transformatoren, die jedoch ebenfalls möglich ist.

Bei der Ausgestaltung des erfindungsgemäßen Gleichspannungswandlers weist die Regelungseinheit erste Phasendetektoren zum Ermitteln der Phasenverschiebungen zwischen jeder der Wechselspannungsphasen der primären Wechselspannung und dem durch den Serienresonanzkreis der Wechselspannungsphase fließenden Strom und zweite Phasendetektoren zum Ermitteln der Phasenverschiebungen zwischen jeder der Wechselspannungsphasen der sekundären Wechselspannung und dem durch den Serienresonanzkreis der Wechselspannungsphase fließenden Strom auf. Die Verwendung unterschiedlicher Phasendetektoren für Wechselspannungsphasen der primären und sekundären Wechselspannung ermöglicht es vorteilhaft, schnell zwischen dem Ermitteln der Phasenverschiebungen zwischen den primären Wechselspannungsphasen und den korrespondierenden Serienresonanzkreisströmen und dem Ermitteln der Phasenverschiebung zwischen den sekundären Wechselspannungsphasen und den korrespondierenden Serienresonanzkreisströmen zu wechseln, wenn sich das Verhältnis der Ausgangsgleichspannung zu der Eingangsgleichspannung ändert.

Bei der Ausgestaltung des erfindungsgemäßen Gleichspannungswandlers ist die Regelungseinheit dazu ausgebildet, durch Änderung einer Phasenverschiebung zwischen der primären Wechselspannung und der sekundären Wechselspannung eine von dem Gleichspannungswandler übertragene Leistung auf einen Leistungssollwert oder die Ausgangsgleichspannung auf einen Spannungssollwert zu regeln.

Bei einer weiteren Ausgestaltung eines erfindungsgemäßen Gleichspannungswandlers ist jeder Serienresonanzkreis auf der Sekundärseite oder der Primärseite der Transformatoreinheit angeordnet oder die Komponenten jedes Serienresonanzkreises sind auf die Sekundärseite und die Primärseite der Transformatoreinheit verteilt. Die Gestaltung der Serienresonanzkreise und die Aufteilung der Komponenten der Serienresonanzkreise auf die Sekundärseite und die Primärseite der Transformatoreinheit ist für die Erfindung unerheblich, das heißt die Erfindung ist vorteilhaft für verschiedene Ausführungen der Serienresonanzkreise verwendbar, da die Transformatoreinheit für die Ströme der Serienresonanzkreise im Wesentlichen nur eine Impedanzänderung bewirkt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Schaltplan eines dreiphasigen Gleichspannungswandlers mit einer Dual Active Bridge-Topologie und einem Serienresonanzkreis für jede Wechselspannungsphase,
- FIG 2: einen Regelkreis zum Regeln eines Gleichspannungswandlers,
- FIG 3: ein Blockdiagramm eines Taktfrequenzreglers zum Regeln einer Taktfrequenz eines Gleichspannungswandlers,
- FIG 4: zeitliche Verläufe einer Wechselspannungsphase einer primären Wechselspannung, der dazu korrespondierenden Wechselspannungsphase einer sekundären Wechselspannung und des durch einen Serienresonanzkreis dieser Wechselspannungsphase fließenden Stroms ohne eine Änderung der Taktfrequenz der Wechselspannung,
- FIG 5: zeitliche Verläufe einer Wechselspannungsphase einer primären Wechselspannung, der dazu korrespondierenden Wechselspannungsphase einer sekundären Wechselspannung und des durch einen Serienresonanzkreis dieser Wechselspannungsphase fließenden Stroms mit einer Änderung der Taktfrequenz der Wechselspannung.

Einander entsprechende Teile sind in den Figuren mit denselben Bezugszeichen versehen.

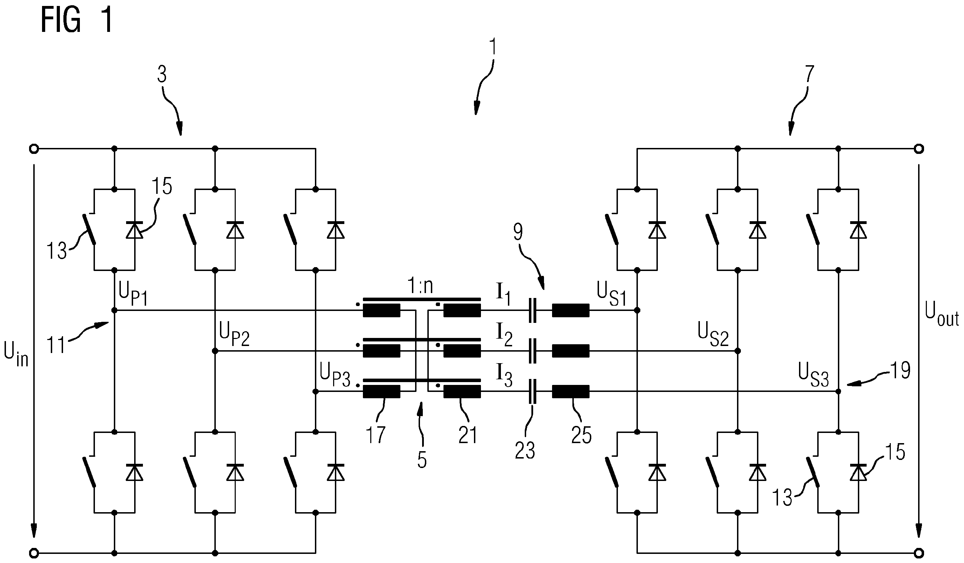

Figur 1 zeigt einen Schaltplan eines dreiphasigen Gleichspannungswandlers 1 zum Umwandeln einer Eingangsgleichspannung Uᵢₙ in eine Ausgangsgleichspannung Uₒᵤₜ. Der Gleichspannungswandler 1 umfasst eine erste Wandlereinheit 3 zum Erzeugen einer primären Wechselspannung aus der Eingangsgleichspannung Uᵢₙ, eine Transformatoreinheit 5 zum Transformieren der primären Wechselspannung in eine sekundäre Wechselspannung, eine zweite Wandlereinheit 7 zum Erzeugen der Ausgangsgleichspannung Uₒᵤₜ aus der sekundären Wechselspannung und für jede Wechselspannungsphase einen Serienresonanzkreis 9.

Der Gleichspannungswandler 1 weist eine Dual Active Bridge-Topologie auf. Die erste Wandlereinheit 3 weist für jede Wechselspannungsphase U_{P1}, U_{P2}, U_{P3} der primären Wechselspannung eine primärseitige Spannungsbrücke 11 auf. Jede primärseitige Spannungsbrücke 11 ist als eine Halbbrücke ausgebildet, in deren Brückenarmen jeweils ein Halbleiterschalter 13 und eine parallel zu dem Halbleiterschalter 13 geschaltete Freilaufdiode 15 angeordnet sind und deren Brückenzweig mit einer Primärwicklung 17 der Transformatoreinheit 5 verbunden ist.

Die zweite Wandlereinheit 5 weist für jede Wechselspannungsphase U_{S1}, U_{S2}, U_{S3} der sekundären Wechselspannung eine sekundärseitige Spannungsbrücke 19 auf. Jede sekundärseitige Spannungsbrücke 19 ist als eine Halbbrücke ausgebildet, in deren Brückenarmen jeweils ein Halbleiterschalter 13 und eine parallel zu dem Halbleiterschalter 13 geschaltete Freilaufdiode 15 angeordnet sind und deren Brückenzweig über einen Serienresonanzkreis 9 mit einer Sekundärwicklung 21 der Transformatoreinheit 5 verbunden ist.

Jeder Serienresonanzkreis 9 weist eine Reihenschaltung eines Kondensators 23 und einer Spule 25 auf.

Die Transformatoreinheit 5 ist als ein dreiphasiger Transformator ausgebildet.

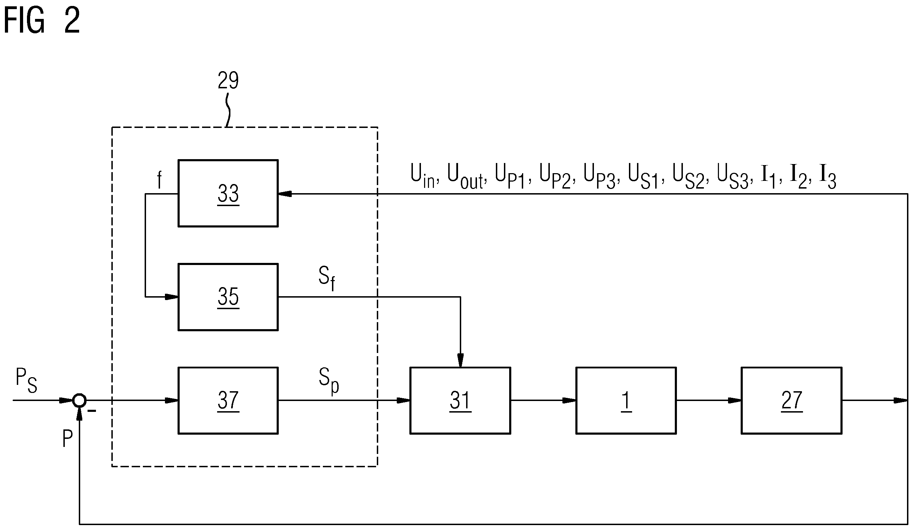

Der Gleichspannungswandler 1 weist ferner eine Messvorrichtungsanordnung 27 und eine Regelungseinheit 29 auf, die in Figur 1 nicht dargestellt sind (siehe Figur 2). Die Messvorrichtungsanordnung 27 weist Messvorrichtungen zum Erfassen der Eingangsgleichspannung Uᵢₙ, der Ausgangsgleichspannung Uₒᵤₜ, einer von dem Gleichspannungswandler 1 übertragenen Leistung P und zeitlicher Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ auf.

Die Regelungseinheit 29 ist dazu ausgebildet, einen Mittelwert von Phasenverschiebungen zwischen jeweils einer Wechselspannungsphase U_{P1}, U_{P2}, U_{P3} der primären Wechselspannung und dem durch den Serienresonanzkreis 9 dieser Wechselspannungsphase U_{P1}, U_{P2}, U_{P3} fließenden Strom I₁, I₂, I₃ durch eine Änderung einer die Wechselspannungen taktenden Taktfrequenz f auf Null zu regeln, wenn das Verhältnis der Ausgangsgleichspannung Uₒᵤₜ zu der Eingangsgleichspannung Uᵢₙ größer als das Übersetzungsverhältnis n der Transformatoreinheit 5 ist, und einen Mittelwert von Phasenverschiebungen zwischen jeweils einer Wechselspannungsphase U_{S1}, U_{S2}, U_{S3} der sekundären Wechselspannung und dem durch den Serienresonanzkreis 9 dieser Wechselspannungsphase U_{S1}, U_{S2}, U_{S3} fließenden Strom I₁, I₂, I₃ auf Null zu regeln, wenn das Verhältnis der Ausgangsgleichspannung Uₒᵤₜ zu der Eingangsgleichspannung Uᵢₙ kleiner als das Übersetzungsverhältnis n ist.

Ferner ist die Regelungseinheit 29 dazu ausgebildet, die von dem Gleichspannungswandler 1 übertragene Leistung P durch Änderung einer Phasenverschiebung zwischen der primären Wechselspannung und der sekundären Wechselspannung auf einen Leistungssollwert P_{S} zu regeln.

Figur 2 zeigt einen Regelkreis zum Betreiben des in Figur 1 gezeigten Gleichspannungswandlers 1 gemäß dem erfindungsgemäßen Verfahren. Der Regelkreis weist die Regelungseinheit 29, eine Ansteuerungsanordnung 31 zum Ansteuern der Halbleiterschalter 13, den Gleichspannungswandler 1 und die Messvorrichtungsanordnung 27 auf.

Die Regelungseinheit 29 umfasst einen Taktfrequenzregler 33, einen spannungsgesteuerten Oszillator 35 (VCO = Voltage-Controlled Oscillator) und einen Phasenverschiebungsregler 37.

Mit der Messvorrichtungsanordnung 27 werden die Eingangsgleichspannung Uᵢₙ, die Ausgangsgleichspannung Uₒᵤₜ, die von dem Gleichspannungswandler 1 übertragene Leistung P und zeitliche Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ erfasst.

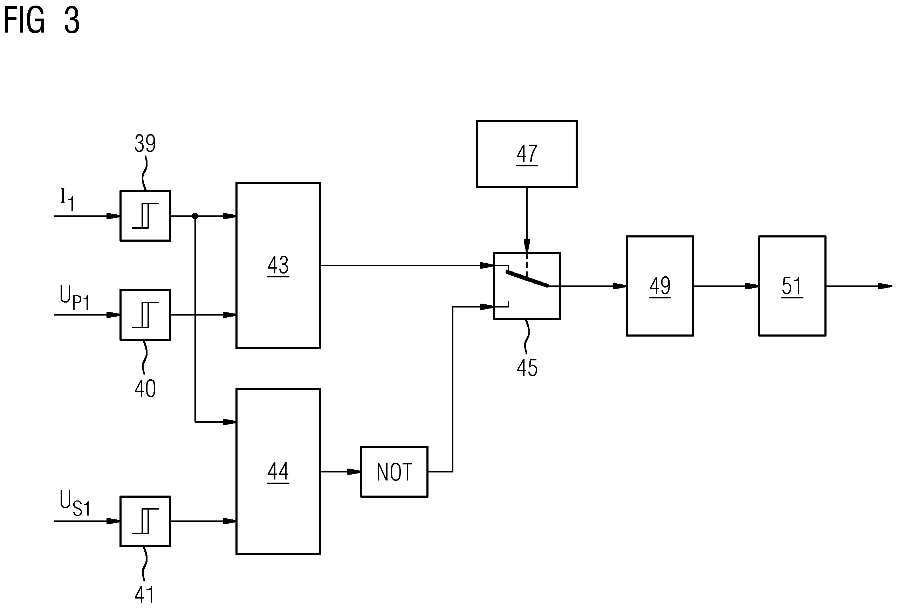

Dem Taktfrequenzregler 33 werden von der Messvorrichtungsanordnung 27 die Eingangsgleichspannung Uᵢₙ, die Ausgangsgleichspannung Uₒᵤₜ und die zeitlichen Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ übermittelt. Der Taktfrequenzregler 33 ermittelt in unten anhand von Figur 3 näher beschriebener Weise die Taktfrequenz f und übermittelt sie dem spannungsgesteuerten Oszillator 35.

Der spannungsgesteuerte Oszillator 35 erzeugt eine Rechteckspannung der Taktfrequenz f, die als Taktsignal S_{f} für die Ansteuerungsanordnung 31 dient.

Dem Phasenverschiebungsregler 37 wird eine Abweichung der von der Messvorrichtungsanordnung 27 ermittelten Leistung P des Gleichspannungswandlers 1 von dem Leistungssollwert P_{S} übermittelt. Der Phasenverschiebungsregler 37 übermittelt ein Phasenverschiebungssignal S_{P} an die Ansteuerungsanordnung 31, durch das die Leistung P durch eine Änderung der Phasenverschiebung zwischen der primären Wechselspannung und der sekundären Wechselspannung auf den Leistungssollwert P_{S} geregelt wird. Der Phasenverschiebungsregler 37 ist beispielsweise als ein PI-Regler ausgebildet.

Die Ansteuerungsanordnung 31 steuert die Halbleiterschalter 13 des Gleichspannungswandlers 1 an. Beispielsweise ist jeder Halbleiterschalter 13 ein Bipolartransistor mit isolierter Gate-Elektrode (IGBT = insulated-gate bipolar transistor) oder ein Metall-Oxid-Halbleiter-Feldeffekttransistor (MOSFET = metal-oxide-semiconductor field-effect transistor) und die Ansteuerungsanordnung 31 weist für jeden Halbleiterschalter 13 einen Gate-Treiber auf, dem das Taktsignal S_{f} und das Phasenverschiebungssignal S_{P} zugeführt werden.

Figur 3 zeigt ein Blockdiagramm des Taktfrequenzreglers 33, wobei beispielhaft die Auswertung einer primären Wechselspannungsphase U_{P1}, der korrespondierenden sekundären Wechselspannungsphase U_{S1} und des Stroms I₁ durch den korrespondierenden Serienresonanzkreis 9 gezeigt ist. Für jede dieser Größen U_{P1}, U_{S1}, I₁ wird mit einem Digitalisierungsglied 39 bis 41 fortlaufend ein digitales Vorzeichensignal ermittelt, das ein momentanes Vorzeichen der Größe U_{P1}, U_{S1}, I₁ angibt. Jedes Digitalisierungsglied 39 bis 41 ist beispielsweise als ein Schmitt-Trigger ausgebildet.

Die für die primäre Wechselspannungsphase U_{P1} und den Strom I₁ ermittelten Vorzeichensignale werden einem ersten digitalen Phasendetektor 43 zugeführt, der daraus eine Phasenverschiebung zwischen der primären Wechselspannungsphase U_{P1} und dem Strom I₁ ermittelt.

Die für die sekundäre Wechselspannungsphase U_{S1} und den Strom I₁ ermittelten Vorzeichensignale werden einem zweiten digitalen Phasendetektor 44 zugeführt, der daraus eine Phasenverschiebung zwischen der sekundären Wechselspannungsphase U_{S1} und dem Strom I₁ ermittelt.

Die Phasendetektoren 43, 44 weisen beispielsweise jeweils ein EXOR-Gatter auf.

Das Ausgangssignal des ersten Phasendetektors 43 und das invertierte Ausgangssignal des zweiten Phasendetektors 44 werden einem Auswahlglied 45 zugeführt, das von einem Vergleichsglied 47 gesteuert wird. Das Vergleichsglied 47 ermittelt ein Verhältnis Uₒᵤₜ/Uᵢₙ der Ausgangsgleichspannung Uₒᵤₜ zu der Eingangsgleichspannung Uᵢₙ und vergleicht das Verhältnis mit dem Übersetzungsverhältnis n. Wenn das Verhältnis Uₒᵤₜ/Uᵢₙ größer als das Übersetzungsverhältnis n ist, wird von dem Auswahlglied 45 das Ausgangssignal des ersten Phasendetektors 43 an ein Mittelungsglied 49 weitergeleitet. Wenn das Verhältnis Uₒᵤₜ/Uᵢₙ kleiner als das Übersetzungsverhältnis n ist, wird von dem Auswahlglied 45 das invertierte Ausgangssignal des zweiten Phasendetektors 44 an das Mittelungsglied 49 weitergeleitet. Das Ausgangssignal des zweiten Phasendetektors 44 wird invertiert, um die Taktfrequenz f im Fall Uₒᵤₜ/Uᵢₙ < n in eine andere Richtung zu ändern als im Fall Uₒᵤₜ/Uᵢₙ > n.

Entsprechend werden die anderen beiden primären Wechselspannungsphasen U_{P2}, U_{P3}, die korrespondierenden sekundären Wechselspannungsphasen U_{S2}, U_{S3} und Ströme I₂, I₃ durch die korrespondierenden Serienresonanzkreise 9 ausgewertet, so dass dem Mittelungsglied 49 für jede Wechselspannungsphase des Gleichspannungswandlers 1 die Phasenverschiebung zwischen der primären Wechselspannungsphase U_{P1}, U_{P2}, U_{P3} und dem Strom I₁, I₂, I₃ durch den korrespondierenden Serienresonanzkreis 9 zugeführt wird, wenn das Verhältnis Uₒᵤₜ/Uᵢₙ größer als das Übersetzungsverhältnis n ist, und als invertiertes Signal die Phasenverschiebung zwischen der sekundären Wechselspannungsphase U_{S1}, U_{S2}, U_{S3} und dem Strom I₁, I₂, I₃ durch den korrespondierenden Serienresonanzkreis 9 zugeführt wird, wenn das Verhältnis Uₒᵤₜ/Uᵢₙ kleiner als das Übersetzungsverhältnis n ist.

Das Mittelungsglied 49 weist einen Tiefpass auf, mit dem die ihm zugeführten Signale gefiltert werden, und bildet aus den gefilterten Signalen einen Mittelwert, den es an ein Regelungsglied 51 ausgibt.

Das Regelungsglied 51 ermittelt aus dem ihm von dem Mittelungsglied 49 zugeführten Signal die Taktfrequenz f für die Ansteuerung der Halbleiterschalter 13. Das Regelungsglied 51 ist beispielsweise als ein PI-Regler ausgebildet.

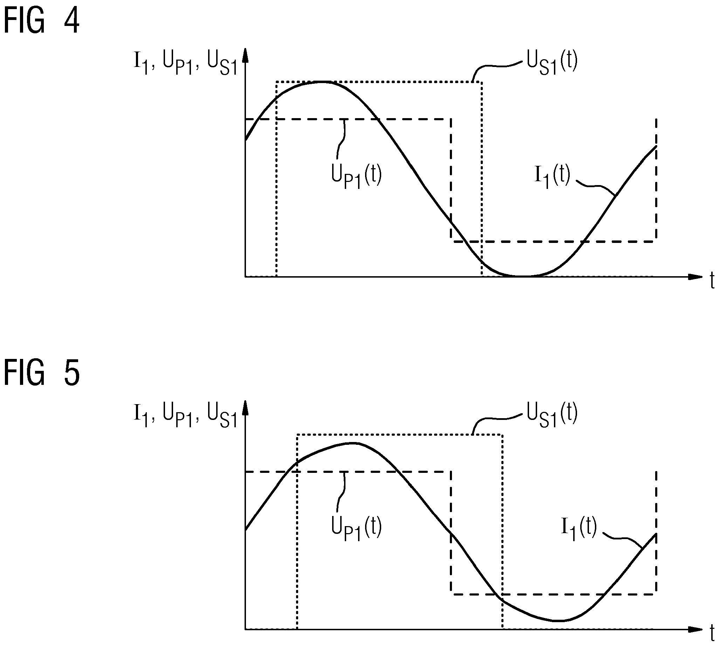

Die Figuren 4 und 5 illustrieren den Effekt der Erfindung auf Verläufe einer primären Wechselspannungsphase U_{P1}, der korrespondierenden sekundären Wechselspannungsphase U_{S1} und des Stroms I₁ durch den korrespondierenden Serienresonanzkreis 9 in Abhängigkeit von einer Zeit t im Fall, dass das Verhältnis Uₒᵤₜ/Uᵢₙ größer als das Übersetzungsverhältnis n ist.

Figur 4 zeigt die Verläufe ohne eine Änderung der Taktfrequenz f. Der Strom I₁ durch den Serienresonanzkreis 9 eilt der primären Wechselspannungsphase U_{P1} und der sekundären Wechselspannungsphase U_{S1} voraus. Dies hat einen Anstieg der Durchgangsverluste zur Folge, weil von primärer Seite und von sekundärer Seite Blindleistung in den Serienresonanzkreis 9 fließt. Außerdem treten hohe Umschaltverluste in der primärseitigen Spannungsbrücke 11 der primären Wechselspannungsphase U_{P1} und der sekundärseitigen Spannungsbrücke 19 der sekundären Wechselspannungsphase U_{S1} auf, da der Momentanwert des Stroms I₁ zu allen Zeitpunkten, in denen sich das Vorzeichen der einer Wechselspannungsphase U_{P1}, U_{S1} verändert, relativ groß ist.

Figur 5 zeigt die Verläufe mit einer erfindungsgemäßen Regelung der Phasenverschiebung zwischen U_{P1} und I₁ auf Null durch eine Änderung der Taktfrequenz f. Durch die Regelung werden die Durchgangsverluste der primärseitigen Spannungsbrücke 11 der primären Wechselspannungsphase U_{P1} gegenüber der in Figur 4 gezeigten Situation reduziert, da von dieser Spannungsbrücke 11 aus keine Blindleistung in den korrespondierenden Serienresonanzkreis 9 fließt. Weiterhin werden die Umschaltverluste deutlich reduziert, da diese primärseitigen Spannungsbrücke 11 genau dann umgeschaltet wird, wenn der Strom I₁ Null ist (so genanntes Zero Current Switching). Dadurch wird der Wirkungsgrad verbessert. Die sekundärseitige Spannungsbrücke 19 der sekundären Wechselspannungsphase U_{S1} verursacht zwar weiterhin eine gewisse Verlustleistung, im Vergleich zu der in Figur 4 gezeigten Situation sind diese jedoch geringer, da der Maximalwert des Stroms I₁ sowie die Momentanwerte des Stroms I₁ in den Umschaltzeitpunkten dieser Spannungsbrücke 19 geringer sind.

Die anhand der Figuren 1 bis 5 beschriebenen Ausführungsbeispiele eines erfindungsgemäßen Gleichspannungswandlers 1 und des erfindungsgemäßen Verfahrens können auf verschiedene Weisen zu anderen Ausführungsbeispielen modifiziert werden. Beispielsweise kann der Gleichspannungswandler 1 eine von drei verschiedenen Anzahlen von Wechselspannungsphasen aufweisen.

Ferner kann vorgesehen sein, dass die Transformatoreinheit 5 statt eines mehrphasigen Transformators für jede Wechselspannungsphase einen Transformator aufweist. Des Weiteren können analoge statt digitaler Phasendetektorn 43, 44 vorgesehen sein. Ferner kann vorgesehen sein, dass die Regelungseinheit 29 dazu ausgebildet ist, durch Änderung einer Phasenverschiebung zwischen der primären Wechselspannung und der sekundären Wechselspannung die Ausgangsgleichspannung Uₒᵤₜ auf einen Spannungssollwert zu regeln statt die übertragene Leistung P auf einen Leistungssollwert P_{S} zu regeln.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Gleichspannungswandlers (1) zum Erzeugen einer mehrphasigen primären Wechselspannung aus einer Eingangsgleichspannung (Uᵢₙ), Transformieren der primären Wechselspannung in eine sekundäre Wechselspannung mit einem Übersetzungsverhältnis (n) und Erzeugen einer Ausgangsgleichspannung (Uₒᵤₜ) aus der sekundären Wechselspannung, wobei der Gleichspannungswandler (1) eine Dual Active Bridge-Topologie mit einem Serienresonanzkreis (9) für jede Wechselspannungsphase aufweist, wobei
- ein Mittelwert von Phasenverschiebungen zwischen jeweils einer Wechselspannungsphase (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) durch eine Änderung einer die Wechselspannungen taktenden Taktfrequenz (f) auf Null geregelt wird, wenn das Verhältnis der Ausgangsgleichspannung (Uₒᵤₜ) zu der Eingangsgleichspannung (Uᵢₙ) größer als das Übersetzungsverhältnis (n) ist,
- ein Mittelwert von Phasenverschiebungen zwischen jeweils einer Wechselspannungsphase (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) durch eine Änderung der Taktfrequenz (f) auf Null geregelt wird, wenn das Verhältnis der Ausgangsgleichspannung (Uₒᵤₜ) zu der Eingangsgleichspannung (Uᵢₙ) kleiner als das Übersetzungsverhältnis (n) ist, wobei durch Änderung einer Phasenverschiebung zwischen der primären Wechselspannung und der sekundären Wechselspannung eine von dem Gleichspannungswandler (1) übertragene Leistung (P) auf einen Leistungssollwert (P_{S}) oder die Ausgangsgleichspannung (Uₒᵤₜ) auf einen Spannungssollwert geregelt wird,
- eine Phasenverschiebung zwischen jeder Wechselspannungsphase (U_{P1}, U_{P2}, U_{P3}) der primären Wechselspannung und dem durch den Serienresonanzkreis (9) der jeweiligen Wechselspannungsphase (U_{P1}, U_{P2}, U_{P3}) fließenden Strom (I₁, I₂, I₃) ermittelt wird und eine Phasenverschiebung zwischen jeder Wechselspannungsphase (U_{S1}, U_{S2}, U_{S3}) der sekundären Wechselspannung und dem durch den Serienresonanzkreis (9) der jeweiligen Wechselspannungsphase (U_{S1}, U_{S2}, U_{S3}) fließenden Strom (I₁, I₂, I₃) ermittelt wird,
- aus den Phasenverschiebungen zwischen den Wechselspannungsphasen (U_{P1}, U_{P2}, U_{P3}) der primären Wechselspannung und den korrespondierenden Serienresonanzkreisströmen und den Phasenverschiebungen zwischen den der Wechselspannungsphasen (U_{S1}, U_{S2}, U_{S3}) der sekundären Wechselspannung und den korrespondierenden Serienresonanzkreisströmen gemäß dem Verhältnis der Ausgangsgleichspannung zu der Eingangsgleichspannung gewählt wird und die gewählten Phasenverschiebungen zum Bilden des Mittelwerts verwendet werden, wobei dieser durch die Änderung der Taktfrequenz (f) auf Null geregelt wird.

2. Gleichspannungswandler (1) zum Erzeugen einer mehrphasigen primären Wechselspannung aus einer Eingangsgleichspannung (Uᵢₙ), Transformieren der primären Wechselspannung in eine sekundäre Wechselspannung mit einem Übersetzungsverhältnis (n) und Erzeugen einer Ausgangsgleichspannung (Uₒᵤₜ) aus der sekundären Wechselspannung, der Gleichspannungswandler (1) umfassend
- für jede Wechselspannungsphase eine primärseitige Spannungsbrücke (11) mit mehreren Halbleiterschaltern (13) zum Erzeugen der primären Wechselspannung aus der Eingangsgleichspannung (Uᵢₙ),
- eine Transformatoreinheit (5) zum Transformieren der primären Wechselspannung in die sekundäre Wechselspannung,
- für jede Wechselspannungsphase eine sekundärseitige Spannungsbrücke (19) mit mehreren Halbleiterschaltern (13) zum Erzeugen der Ausgangsgleichspannung (Uₒᵤₜ) aus der sekundären Wechselspannung,
- für jede Wechselspannungsphase einen Serienresonanzkreis (9),
- eine Messvorrichtungsanordnung (27), die zum Erfassen der Eingangsgleichspannung (Uᵢₙ), der Ausgangsgleichspannung (Uₒᵤₜ) und zeitlicher Verläufe der Wechselspannungsphasen (U_{P1}, U_{P2}, U_{P3}) der primären Wechselspannung, der dazu korrespondierenden Wechselspannungsphasen (U_{S1}, U_{S2}, U_{S3}) der sekundären Wechselspannung und der durch die Serienresonanzkreise (9) dieser Wechselspannungsphasen fließenden Ströme (I₁, I₂, I₃) ausgebildet ist, und
- eine Regelungseinheit (29), die dazu ausgebildet ist, einen Mittelwert der Phasenverschiebungen zwischen jeweils einer dieser Wechselspannungsphasen (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) durch eine Änderung einer die Wechselspannungen taktenden Taktfrequenz (f) auf Null zu regeln, wenn das Verhältnis der Ausgangsgleichspannung (Uₒᵤₜ) zu der Eingangsgleichspannung (Uᵢₙ) größer als das Übersetzungsverhältnis (n) ist,
- einen Mittelwert der Phasenverschiebungen zwischen jeweils einer dieser Wechselspannungsphasen (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) durch eine Änderung der Taktfrequenz (f) auf Null zu regeln, wenn das Verhältnis der Ausgangsgleichspannung (Uₒᵤₜ) zu der Eingangsgleichspannung (Uᵢₙ) kleiner als das Übersetzungsverhältnis (n) ist, und
- durch eine Änderung einer Phasenverschiebung zwischen der primären Wechselspannung und der sekundären Wechselspannung eine von dem Gleichspannungswandler (1) übertragene Leistung (P) auf einen Leistungssollwert (P_{S}) oder die Ausgangsgleichspannung (Uₒᵤₜ) auf einen Spannungssollwert zu regeln, wobei
- die Regelungseinheit (29) erste Phasendetektoren (43) zum Ermitteln der Phasenverschiebungen zwischen jeder der Wechselspannungsphasen (U_{P1}, U_{P2}, U_{P3}) der primären Wechselspannung und dem durch den Serienresonanzkreis (9) der Wechselspannungsphase (U_{P1}, U_{P2}, U_{P3}) fließenden Strom (I₁, I₂, I₃) und zweite Phasendetektoren (44) zum Ermitteln der Phasenverschiebung zwischen jeder der Wechselspannungsphasen (U_{S1}, U_{S2}, U_{S3}) der sekundären Wechselspannung und dem durch den Serienresonanzkreis (9) der Wechselspannungsphase (U_{S1}, U_{S2}, U_{S3}) fließenden Strom (I₁, I₂, I₃) aufweist und
- die Regelungseinheit (29) ein Auswahlglied (45) umfasst, zur Auswahl zwischen den Phasenverschiebungen zwischen den Wechselspannungsphasen (U_{P1}, U_{P2}, U_{P3}) der primären Wechselspannung und den korrespondierenden Serienresonanzkreisströmen und den Phasenverschiebungen zwischen den Wechselspannungsphasen (U_{S1}, U_{S2}, U_{S3}) der sekundären Wechselspannung und den korrespondierenden Serienresonanzkreisströmen, wobei die Regelungseinheit (29) zum Bilden des Mittelwerts und, durch die Änderung der Taktfrequenz, zum Regeln des Mittelwerts auf Null ausgebildet ist.

3. Gleichspannungswandler (1) nach Anspruch 2, wobei jede primärseitige Spannungsbrücke (11) eine Halbbrücke ist, in deren Brückenarmen jeweils ein Halbleiterschalter (13) angeordnet ist und deren Brückenzweig mit einer Primärwicklung (17) der Transformatoreinheit (5) verbunden ist, und jede sekundärseitige Spannungsbrücke (19) eine Halbbrücke ist, in deren Brückenarmen jeweils ein Halbleiterschalter (13) angeordnet ist und deren Brückenzweig mit einer Sekundärwicklung (21) der Transformatoreinheit (5) verbunden ist.

4. Gleichspannungswandler (1) nach Anspruch 2 oder 3, wobei die Transformatoreinheit (5) als ein mehrphasiger Transformator ausgebildet ist oder für jede Wechselspannungsphase einen Transformator aufweist.

5. Gleichspannungswandler (1) nach einem der Ansprüche 2 bis 4, wobei jeder Serienresonanzkreis (9) auf der Sekundärseite oder der Primärseite der Transformatoreinheit (5) angeordnet ist oder die Komponenten jedes Serienresonanzkreises (9) auf die Sekundärseite und die Primärseite der Transformatoreinheit (5) verteilt sind.

## Claims

1. Method of operating a DC-to-DC converter (1) for generating a multi-phase primary AC voltage from a DC input voltage (Uᵢₙ), transforming the primary AC voltage into a secondary AC voltage with a transformation ratio (n), and generating a DC output voltage (Uₒᵤₜ) from the secondary AC voltage, wherein the DC-to-DC converter (1) has a dual active bridge topology with a series resonant circuit (9) for each AC voltage phase, wherein
- an average value of phase shifts between an AC voltage phase (U_{P1}, U_{P2}, U_{P3}) of the primary AC voltage and the current (I₁, I₂, I₃) flowing through the series resonant circuit (9) of that AC voltage phase (U_{P1}, U_{P2}, U_{P3}) is controlled to zero in each case by changing a clock frequency (f) clocking the AC voltages if the ratio of the DC output voltage (Uₒᵤₜ) to the DC input voltage (Uᵢₙ) is greater than the transformation ratio (n),
- an average value of phase shifts between an AC voltage phase (U_{S1}, U_{S2}, U_{S3}) of the secondary AC voltage and the current (I₁, I₂, I₃) flowing through the series resonant circuit (9) of that AC voltage phase (U_{S1}, U_{S2}, U_{S3}) is controlled to zero in each case by changing the clock frequency (f) if the ratio of the DC output voltage (Uₒᵤₜ) to the DC input voltage (Uᵢₙ) is less than the transformation ratio (n), wherein by changing a phase shift between the primary AC voltage and the secondary AC voltage, a power (P) transmitted by the DC-to-DC converter (1) is controlled to a power setpoint value (P_{S}) or the DC output voltage (Uₒᵤₜ) is controlled to a voltage setpoint value,
- a phase shift between each AC voltage phase (U_{P1}, U_{P2}, U_{P3}) of the primary AC voltage and the current (I₁, I₂, I₃) flowing through the series resonant circuit (9) of the respective AC voltage phase (U_{P1}, U_{P2}, U_{P3}) is determined and a phase shift between each AC voltage phase (U_{S1}, U_{S2}, U_{S3}) of the secondary AC voltage and the current (I₁, I₂, I₃) flowing through the series resonant circuit (9) of the respective AC voltage phase (U_{S1}, U_{S2}, U_{S3}) is determined,
- a choice is made from the phase shifts between the AC voltage phases (U_{P1}, U_{P2}, U_{P3}) of the primary AC voltage and the corresponding series resonant circuit currents and the phase shifts between the AC voltage phases (U_{S1}, U_{S2}, U_{S3}) of the secondary AC voltage and the corresponding series resonant circuit currents, according to the ratio of the DC output voltage to the DC input voltage, and the chosen phase shifts are used to form the average value, wherein this is controlled to zero by changing the clock frequency (f).

2. DC-to-DC converter (1) for generating a multi-phase primary AC voltage from a DC input voltage (Uᵢₙ), transforming the primary AC voltage into a secondary AC voltage with a transformation ratio (n), and generating a DC output voltage (Uₒᵤₜ) from the secondary AC voltage, said DC-to-DC converter (1) comprising
- for each AC voltage phase, a primary-side voltage bridge (11) having a plurality of semiconductor switches (13) for generating the primary AC voltage from the DC input voltage (Uᵢₙ),
- a transformer unit (5) for transforming the primary AC voltage into the secondary AC voltage,
- for each AC voltage phase, a secondary-side voltage bridge (19) having a plurality of semiconductor switches (13) for generating the DC output voltage (Uₒᵤₜ) from the secondary AC voltage,
- a series resonant circuit (9) for each AC voltage phase,
- a measuring device arrangement (27) which is designed to detect the DC input voltage (Uᵢₙ), the DC output voltage (Uₒᵤₜ) and variations over time of the AC voltage phases (U_{P1}, U_{P2}, U_{P3}) of the primary AC voltage, the corresponding AC voltage phases (U_{S1}, U_{S2}, U_{S3}) of the secondary AC voltage, and the currents (I₁, I₂, I₃) flowing through the series resonant circuits (9) of these AC voltage phases, and
- a control unit (29) which is designed to control to zero an average value of the phase shifts between one of these AC voltage phases (U_{P1}, U_{P2}, U_{P3}) of the primary AC voltage and the current (I₁, I₂, I₃) flowing through the series resonant circuit (9) of this AC voltage phase (U_{P1}, U_{P2}, U_{P3}) in each case by changing a clock frequency (f) clocking the AC voltages if the ratio of the DC output voltage (Uₒᵤₜ) to the DC input voltage (Uᵢₙ) is greater than the transformation ratio (n),
- to control to zero an average value of the phase shifts between one of these AC voltage phases (U_{S1}, U_{S2}, U_{S3}) of the secondary AC voltage and the current (I₁, I₂, I₃) flowing through the series resonant circuit (9) of this AC voltage phase (U_{S1}, U_{S2}, U_{S3}) in each case by changing the clock frequency (f) if the ratio of the DC output voltage (Uₒᵤₜ) to the DC input voltage (Uᵢₙ) is less than the transformation ratio (n), and
- to control a power (P) transmitted from the DC-to-DC converter (1) to a power setpoint value (PS) or the DC output voltage (Uₒᵤₜ) to a voltage setpoint value by changing a phase shift between the primary AC voltage and the secondary AC voltage, wherein
- the control unit (29) comprises first phase detectors (43) for detecting the phase shifts between each of the AC voltage phases (U_{P1}, U_{P2}, U_{P3}) of the primary AC voltage and the current (I₁, I₂, I₃) flowing through the series resonant circuit (9) of the AC voltage phase (U_{P1}, U_{P2}, U_{P3}), and second phase detectors (44) for detecting the phase shift between each of the AC voltage phases (U_{S1}, U_{S2}, U_{S3}) of the secondary AC voltage and the current (I₁, I₂, I₃) flowing through the series resonant circuit (9) of the AC voltage phase (U_{S1}, U_{S2}, U_{S3}) and
- the control unit (29) comprises a selecting element (45) for selecting between the phase shifts between the AC voltage phases (U_{P1}, U_{P2}, U_{P3}) of the primary AC voltage and the corresponding series resonant circuit currents and the phase shifts between the AC voltage phases (U_{S1}, U_{S2}, U_{S3}) of the secondary AC voltage and the corresponding series resonant circuit currents, wherein the control unit (29) is designed to form the average value and to control the average value to zero by changing the clock frequency.

3. DC-to-DC voltage converter (1) according to claim 2, wherein each primary-side voltage bridge (11) is a half-bridge whose bridge arms contain a semiconductor switch (13) in each case and whose bridge branch is connected to a primary winding (17) of the transformer unit (5), and each secondary-side voltage bridge (19) is a half-bridge whose bridge arms contain a semiconductor switch (13) in each case and whose bridge branch is connected to a secondary winding (21) of the transformer unit (5).

4. DC-to-DC voltage converter (1) according to claim 2 or 3, wherein the transformer unit (5) is designed as a multi-phase transformer or has a transformer for each AC voltage phase.

5. DC-to-DC converter (1) according to one of claims 2 to 4, wherein each series resonant circuit (9) is disposed on the secondary side or the primary side of the transformer unit (5) or the components of each series resonant circuit (9) are distributed between the secondary side and the primary side of the transformer unit (5).

## Revendications

1. Procédé pour faire fonctionner un convertisseur (1) de tension continue pour la production d'une tension alternative primaire polyphasée à partir d'une tension (Uᵢₙ) continue d'entrée, la transformation de la tension alternative primaire en une tension alternative secondaire avec un rapport (n) de multiplication et la production d'une tension (Uₒᵤₜ) continue de sortie à partir de la tension alternative secondaire, dans lequel le convertisseur (1) de tension continue a une topologie de bridge dual active ayant un circuit (9) de résonnance série pour chaque phase de la tension alternative, dans lequel
- on règle à zéro, par une modification d'une fréquence (f) d'horloge cadençant les tensions alternatives, une valeur moyenne de déphasages entre respectivement une phase (U_{P1}, U_{P2}, U_{P3}) de la tension alternative primaire et le courant (I₁, I₂, I₃) passant dans le circuit (9) de résonnance série de cette phase (U_{P1}, U_{P2}, U_{P3}) de la tension alternative, si le rapport de la tension (Uₒᵤₜ) continue de sortie à la tension (Uᵢₙ) d'entrée est plus grand que le rapport (n) de multiplication,
- on règle à zéro, par une modification de la fréquence (f) d'horloge, une valeur moyenne de déphasages entre respectivement une phase (U_{S1}, U_{S2}, U_{S3}) de la tension alternative secondaire et du courant (I₁, I₂, I₃) passant dans le circuit (9) de résonnance série de cette phase (U_{S1}, U_{S2}, U_{S3}) de la tension alternative, si le rapport de la tension (Uₒᵤₜ) continue de sortie à la tension (Uᵢₙ) continue d'entrée est plus petit que le rapport (n) de multiplication, dans lequel, par modification d'un déphasage entre la tension alternative primaire et la tension alternative secondaire, on règle à une valeur de consigne de la tension une puissance (P) transmise par le convertisseur (1) de tension continue à une valeur (P_{S}) de consigne de la puissance ou la tension (Uₒᵤₜ) continue de sortie à une valeur de consigne de la tension,
- on détermine un déphasage entre chaque phase (U_{P1}, U_{P2}, U_{P3}) de la tension alternative primaire et le courant (I₁, I₂, I₃) passant dans le circuit (9) de résonnance série de la phase (U_{P1}, U_{P2}, U_{P3}) respective de la tension alternative, et
on détermine un déphasage entre chaque phase (U_{S1}, U_{S2}, U_{S3}) de la tension alternative secondaire et le courant (I₁, I₂, I₃) passant dans le circuit (9) de résonnance série de la phase (U_{S1}, U_{S2}, U_{S3}) respective de la tension alternative,
- on sélectionne, suivant le rapport de la tension continue de sortie à la tension continue d'entrée, entre les déphasages entre les phases (U_{P1}, U_{P2}, U_{P3}) de la tension alternative primaire et les courants dans les circuits de résonnance séries correspondants et entre les déphasages entre les phases (U_{S1}, U_{S2}, U_{S3}) de la tension alternative secondaire et les courants dans les circuits de résonnance séries correspondants, et on utilise les déphasages sélectionnés pour la formation de la valeur moyenne, dans lequel on règle celle-ci à zéro en modifiant la fréquence (f) d'horloge.

2. Convertisseur (1) de tension continue pour la production d'une tension alternative primaire polyphasée à partir d'une tension (Uᵢₙ) continue d'entrée, la transformation de la tension alternative primaire en une tension alternative secondaire en ayant un rapport (n) de multiplication et la production d'une tension (Uₒᵤₜ) continue de sortie à partir de la tension alternative secondaire, le convertisseur (1) de tension continue comprenant
- pour chaque phase de la tension alternative, un pont (11) de tension du côté primaire ayant plusieurs interrupteurs (13) à semiconducteur pour la production de la tension alternative à partir de la tension (Uᵢₙ) continue d'entrée,
- une unité (5) de transformateur pour la transformation de la tension alternative primaire en la tension alternative secondaire,
- pour chaque phase de la tension alternative, un pont (19) de tension du côté secondaire ayant plusieurs interrupteurs (13) à semiconducteur pour la production de la tension (Uₒᵤₜ) continue de sortie à partir de la tension alternative secondaire,
- pour chaque phase de la tension alternative, un circuit (9) de résonnance série,
- un agencement (27) de montage de mesure, qui est constitué pour la détection de la tension (Uᵢₙ) continue d'entrée, la tension (Uₒᵤₜ) continue de sortie et des courbes en fonction du temps des phases (U_{P1}, U_{P2}, U_{P3}) de la tension alternative primaire des phases (U_{S1}, U_{S2}, U_{S3}) de la tension alternative secondaire y correspondant et des courants (I₁, I₂, I₃) passant dans les circuits (9) de résonnance série de ces phases de la tension alternative, et
- une unité (29) de réglage, qui est constituée pour régler à zéro, par une modification d'une fréquence (f) d'horloge cadençant les tensions alternatives, une valeur moyenne des déphasages entre respectivement l'une de ces phases (U_{P1}, U_{P2}, U_{P3}) de la tension alternative primaire et le courant (I₁, I₂, I₃) passant dans le circuit (9) de résonnance série de cette phase (U_{P1}, U_{P2}, U_{P3}) de la tension alternative, si le rapport de la tension (Uₒᵤₜ) continue de sortie à la tension (Uᵢₙ) continue d'entrée est plus grand que le rapport (n) de multiplication,
- pour régler à zéro, par une modification de la fréquence (f) d'horloge, une valeur moyenne des déphasages entre respectivement l'une de ces phases (U_{S1}, U_{S2}, U_{S3}) de la tension alternative secondaire et le courant (I₁, I₂, I₃) passant dans le circuit (9) de résonnance série de cette phase (U_{S1}, U_{S2}, U_{S3}) de la tension alternative, si le rapport de la tension (Uₒᵤₜ) continue de sortie à la tension (Uᵢₙ) continue d'entrée est plus petit que le rapport (n) de multiplication, et
- pour régler, par une modification d'un déphasage entre la tension alternative primaire et la tension alternative secondaire, une puissance (P) transmise par le convertisseur (1) de la tension continue à une valeur (P_{S}) de consigne de la puissance ou la tension (Uₒᵤₜ) continue de sortie à une valeur de consigne de la tension, dans lequel
- l'unité (29) de réglage a des premiers détecteurs (43) de phase pour la détermination des déphasages entre chacune des phases (U_{P1}, U_{P2}, U_{P3}) de la tension alternative primaire et le courant (I₁, I₂, I₃) passant dans le circuit (9) de résonnance série de la phase (U_{P1}, U_{P2}, U_{P3}) de la tension alternative et des deuxièmes détecteurs (44) de phase pour la détermination du déphasage entre chacune des phases (U_{S1}, U_{S2}, U_{S3}) de la tension alternative secondaire et le courant (I₁, I₂, I₃) passant dans le circuit (9) série de la phase (U_{S1}, U_{S2}, U_{S3}) de la tension alternative, et
- l'unité (29) de réglage comprend un organe (45) de sélection, pour la sélection entre les déphasages entre les phases (U_{P1}, U_{P2}, U_{P3}) de la tension alternative primaire et les courants passant dans le circuit de résonnance série correspondant et les déphasages entre les phases (U_{S1}, U_{S2}, U_{S3}) de la tension alternative secondaire et les courants passant dans le circuit de résonnance série correspondant,
dans lequel l'unité (29) de réglage est constituée pour la formation de la valeur moyenne et est constituée pour, par la modification de la fréquence d'horloge, régler la valeur moyenne à zéro.

3. Convertisseur (1) de tension continue suivant la revendication 2, dans lequel chaque pont (11) de tension du côté primaire est un demi-pont, dans les bras de pont duquel est monté respectivement un interrupteur (13) à semiconducteur et dont la branche du pont est reliée à un enroulement (17) primaire de l'unité (5) de transformateur, et chaque pont (19) de tension du côté secondaire est un demi-pont, dans les bras de pont duquel est monté respectivement un interrupteur (13) à semiconducteur et dont la branche du pont est reliée à un enroulement (21) secondaire de l'unité (5) de transformateur.

4. Convertisseur (1) de tension continue suivant la revendication 2 ou 3, dans lequel l'unité (5) de transformateur est constituée sous la forme d'un transformateur polyphasé ou a un transformateur pour chaque phase de la tension alternative.

5. Convertisseur (1) de tension continue suivant l'une des revendications 2 à 4, dans lequel chaque circuit (9) de résonnance série est monté du côté secondaire ou du côté primaire de l'unité (5) de transformateur ou les composants de chaque circuit (9) de résonnance série sont répartis sur le côté secondaire et le côté primaire de l'unité (5) de transformateur.
